# EUROPÄISCHE PATENTSCHRIFT

(11) **EP 1 600 748 B1**
(45) Veröffentlichungstag und Bekanntmachung des Hinweises auf die Patenterteilung: **13.04.2016**
(21) Anmeldenummer: 05003958.5
(22) Anmeldetag: 24.02.2005
(51) Int. Cl.: G01F 23/284, H01P 1/203

(54) **Radar-Füllstandsmessgerät**
Radar-based level gauge
Dispositif de mesure de niveau par radar

(30) Priorität: 26.05.2004 DE 102004026560
(43) Veröffentlichungstag der Anmeldung: 30.11.2005
(73) Patentinhaber: Krohne S.A., 26103 Romans - Cedex (FR)
(72) Erfinder: Bletz, Achim, 26260 Clérieux (FR); Musch, Thomas, Dr., 44795 Bochum (DE)
(74) Vertreter: Gesthuysen Patent- und Rechtsanwälte

(56) Entgegenhaltungen:
- EP-A- 1 069 679
- WO-A-94/28592
- US-A1- 2004 066 588

## Beschreibung

Die Erfindung betrifft ein Radar-Füllstandsmeßgerät, mit einer Hochfrequenzeinrichtung zum Erzeugen und Verarbeiten von Radar-Signalen mit vorbestimmter Frequenz und Wellenlänge, einer Antenne zum Abstrahlen oder/und Empfangen der Radar-Signale sowie einer auf einer Platine vorgesehenen und eine Mikrostreifenleitung aufweisenden Schaltung zum Verbinden der Hochfrequenzeinrichtung mit der Antenne. Ein derartiges Radar-Füllstandsmeßgerät ist z. B. aus der US 2004/0066588 A1 bekannt.

In der Industrie besteht häufig die Aufgabe, den Füllstand eines Mediums, wie einer Flüssigkeit oder eines Schüttguts, in einem Behälter, wie einem Tank, zu messen. Hierzu ist eine Mehrzahl von Techniken bekannt, wobei man zwischen berührenden Füllstandsmeßverfahren einerseits und nichtberührenden Füllstandsmeßverfahren andererseits unterscheidet. Zu den berührenden Füllstandsmeßverfahren, bei denen ein Bestandteil der Meßeinrichtung mit dem Medium, dessen Füllstand zu messen ist, in Berührung kommt, gehören z. B. die Füllstandsmessung mittels eines Schwimmers, eines Auftriebskörpers oder einer Tastplatte. Ferner gehören zu den berührenden Füllstandsmeßverfahren kapazitive Messungen, bei denen die füllhöhenabhängige Kapazität zwischen einer in das Medium eintauchenden Elektrode und der Wand des Behälters erfaßt wird, sowie eine thermische Messung, bei der die erhöhte Wärmeabfuhr beim Eintauchen eines stromdurchflossenen, temperaturabhängigen Widerstands in das Medium dadurch ausgenutzt wird, daß sich der elektrische Widerstand mit der Eintauchtiefe verändert.

Zu den nichtberührenden Füllstandsmeßverfahren gehören z. B. die Messung mittels Laser oder Ultraschall. Dabei wird ein Laser- bzw. Ultraschallsignal ausgesandt, an der Oberfläche des Mediums reflektiert, und das reflektierte Signal wird wieder erfaßt, wobei auf die Füllhöhe des Mediums über die Laufzeit des Signals geschlossen wird. Auf dem selben Prinzip basiert das Radar-Füllstandsmeßverfahren, bei dem ein Mikrowellensignal erzeugt, über eine Antenne, wie eine Stabantenne oder eine Hornantenne, in Richtung auf das Medium, dessen Füllstandshöhe zu messen ist, ausgesandt wird, an der Oberfläche des Mediums reflektiert wird und von der Antenne oder einer anderen Antenne wieder erfaßt wird.

Dabei existieren unterschiedliche Radar-Füllstandsmeßverfahren: Beim Puls-Radar-Füllstandsmeßverfahren wird ein Mikrowellensignal in kurzen Impulsen ausgesandt, und zwar unmoduliert oder trägerfrequenzmodoliert. Aus der Laufzeit der Mikrowellenimpulse vom Sender zur Oberfläche des Mediums und zurück zum Empfänger wird der Abstand zwischen Sender/Empfänger und dem Medium ermittelt, wobei als Sender und Empfänger typischerweise eine gemeinsame Antenne verwendet wird. Beim FMCW-Radär-Füllstandsmeßverfahren (FMCW = Frequency-Modulated Continuous Wave) liegt das Mikrowellensignal kontinuierlich an, wobei jedoch die Frequenz moduliert wird, und zwar typischerweise in aufeinanderfolgenden Rampen. Durch die Verzögerungszeit während der Signalausbreitung hat sich die Sendefrequenz beim Empfang des reflektierten Signals geändert, so daß man aus der Differenzfrequenz auf den Abstand der reflektierenden Oberfläche und damit auf den Füllstand schließen kann. Schließlich ist noch das TDR-Radar-Füllstands meßverfahren (TDR = Time Domaine Reflectometry) bekannt, das Ähnlichkeit mit dem Puls-Radar-Füllstandsmeßverfahren aufweist, im allgemeinen jedoch leitungsgebunden arbeitet und elektrische Impulse ohne Trägerfrequenz verwendet.

Bevor das Radar-Signal von der Antenne in Richtung auf die Oberfläche des Mediums, dessen Füllstand erfaßt werden soll, abgestrahlt werden kann, muß das Radar-Signal von der Hochfrequenzeinrichtung bis zur Antenne transportiert werden. Dazu sind leitergebundene Übertragungsstrecken erforderlich, wie eine Koaxialleitung, die aus einem Innenleiter und einem Außenleiter mit dazwischenliegendem Dielektrikum besteht, oder eine Parallelleitung, bei der zwei Leiter durch Abstandhalter oder eine dielektrische Ummantelung parallel geführt werden. Weiterhin sind Hohlleiter bekannt, die aus einem metallischen Rohr mit rundem oder rechteckigem Querschnitt bestehen, in dem sich das hochfrequente elektromagnetische Radar-Signal ausbreiten kann. Dabei kann das Innere des Hohlleiters mit Luft oder mit einem Dielektrikum gefüllt sein.

Schließlich sind Planarleitungen bekannt, die aus ebenen Leitungsstrukturen bestehen, die auf einem dielektrischen Substrat aufgebracht sind. Solche Planarleitungen können z. B. in Form von Mikrostreifenleitungen auf einer Platine aufgebracht sein, wobei auf der einen Seite der Platine die eigentlichen Wellenleiterstrukturen und auf der anderen Seite der Platine eine von diesen Wellenleiterstrukturen durch die aus dielektrischem Material bestehende Platine getrennte metallische Beschichtung vorgesehen ist Planarleitungen, wie Mikrostreifenleitungen, haben den Vorteil, daß auch andere Bauteile auf einfache Weise planar montiert und auf der Platine bereitgestellt werden können.

Insbesondere in der chemischen Industrie und in verwandten Bereichen kann die Anforderung bestehen, ein Radar-Füllstandsmeßgerät, wie auch andere Meßeinrichtungen, explosionsgeschützt auszuführen. Bei Radar-Füllstandsmeßgeräten ist ein derartiger Explosionsschutz insbesondere dann erforderlich, wenn z. B. der Füllstand eines explosiven Mediums in einem Tank bestimmt werden soll. Nach der Norm DIN EN 50014 sind Bestimmungen für elektrische Betriebsmittel in explosionsgefährdeten Bereichen festgelegt, nämlich in Form von verschiedenen Zündschutzarten.

Eine dieser Zündschutzarten ist die Zündschutzart "Eigensicherheit" auch kurz mit "Ex-i" bezeichnet. Bei der Zündschutzart "Eigensicherheit" wird die in den eigensicheren Stromkreisen vorhandene Energie derart begrenzt, daß die Stromkreise weder im Normalbetrieb noch im Störfall, wie bei einem Kurzschluß, in der Lage sind, explosionsfähige Gemische zu zünden, z. B. durch unzulässig hohe Temperaturen, Zündfunken oder Lichtbögen. Dabei bezieht sich die Eigensicherheit nicht auf ein einzelnes Betriebsmittel, sondern auf den gesamten, eigensicher ausgelegten Stromkreis.

Zu einem solchen eigensicher ausgelegten Stromkreis gehören neben den Verbindungsleitungen wenigstens ein eigensicheres Betriebsmittel und ein zugehöriges Betriebsmittel. Als eigensicheres Betriebsmittel wird ein Betriebsmittel bezeichnet, das nur eigensicher ausgelegte Stromkreise aufweist Das heißt, daß Spannung und Strom bei dem eigensicheren Betriebsmittel immer so klein sind, so daß bei Kurzschluß, Unterbrechung oder Erdschluß die Zündenergie immer kleiner als die Mindestzündenergie bleibt, so daß keine Zündung eines explosiven Gasgemisches erfolgen kann. Eigensichere Betriebsmittel sind für den Betrieb direkt im explosionsgefährdeten Bereich geeignet. Im Gegensatz dazu werden als zugehörige Betriebsmittel solche Betriebsmittel bezeichnet, bei denen nicht alle Stromkreise eigensicher ausgelegt sind. Ein zugehöriges Betriebsmittel enthält jedoch wenigstens einen eigensicheren Stromkreis, der in den explosionsgefährdeten Bereich geführt werden darf. Damit wird also ein nichteigensicheres in ein eigensicheres Signal umgesetzt. Zugehörige Betriebsmittel liegen z. B. als reine Signaltrenner, typischerweise als Sicherheitsbarrieren bezeichnet, oder als signalumformende Geräte vor, z. B. in Form von Meßumformern, Transmitterspeisegeräten oder Trennschaltverstärker.

Bei dem eingangs beschriebenen, aus der US 2004/0066588 A1 bekannten Radar-Füllstandsmeßgerät ist die auf einer Platine vorgesehene und eine Mikrostreifenleitung aufweisende Schaltung zur Verbindung der Hochfrequenzeinrichtung mit der Antenne durch das Vorsehen der für niederfrequente Signale und für Gleichstromsignale wirksamen Erdungsleitung eigensicher auslegbar. Der als Erdungsleitung wirkende Teil der Mikrostreifenleitung weist dabei eine Länge von im wesentlichen einem Viertel der vorbestimmten Wellenlänge der Radar-Signale auf, zweigt an seinem einem Ende von der eigentlichen Verbindungsleitung zwischen Hochfrequenzeinrichtung einerseits und Antenne andererseits ab und ist mit seinem anderen Ende geerdet, nämlich mittels Durchkontaktierungen durch die Platine hindurch auf eine auf der anderen Seite der Platine vorgesehenen Erdungsschicht. Bei entsprechender Dimensionierung dieser Erdungsleitung, insbesondere nämlich bei hinreichender Breite und sicherer Erdung, kann Eigensicherheit der Schaltung erzielt werden, da sie für niederfrequente Signalanteile oder DC-Anteile als Erdung wirkt, während die hochfrequenten Signalanteile nicht betroffen sind, diese Art der Erdung nicht "sehen". In einer Ausgestaltung ist die Mikrostreifenleitung ergänzend mit einem Fächer verbunden, wobei jedoch keine unmittelbare Verbindung zwischen der einen Erdungsleitung und dem Fächer gegeben ist.

Die in der US 2004/0066588 A1 beschriebene Konstruktion ist jedoch mit dem Nachteil einer nur schlechten Reproduzierbarkeit behaftet. Darüber hinaus ist eine derartige Erdungsmaßnahme nur schwierig simulierbar, da eine Bohrung durch die Platine hindurch einerseits und die andere Seite der Platine mit der Erdungsschicht andererseits im Rahmen der verwendeten numerischen Simulationsverfahren berücksichtigt werden müssen, was den damit verbundenen Aufwand deutlich erhöht.

Die WO 94/28592 A beschreibt unterschiedliche Mikrowellenschaltungen und Erdungsleitungen, die mit einer Mikrostreifenleitung verbunden sind. Eine Erdungsleitung, die an einem Ende mit Masse verbunden ist, verfügt über zwei Abschnitte mit jeweils einer Länge von einem Viertel der Wellenlänge der zu übertragenden Mikrowellensignale und über einen Fächer, dessen Radius ebenfalls ein Viertel der Wellenlänge beträgt und dessen Spitze zwischen den beiden Abschnitten mündet.

Die EP 1 069 679 A1 beschreibt einen Leistungsbegrenzer für Radargeräte mit mehreren Stufen und Teilschaltungen. Unter anderem ist eine mit Masse verbundene Erdungsleitung vorgesehen, die einen ersten Abschnitt und einen zweiten Abschnitt aufweist, zwischen denen die Spitze eines Fächers mündet.

Es ist daher die Aufgabe der Erfindung, ein derartiges Radar-Füllstandsmeßgerät anzugeben, das auf einfache Weise reproduzierbar in Zündschutzart "Eigensicherheit" ausgelegt werden kann.

Ausgehend von dem eingangs beschriebenen Radar-Füllstandsmeßgerät ist die zuvor hergeleitete und aufgezeigte Aufgabe dadurch gelöst, dass die Mikrostreifenleitung eine Mehrzahl von Erdungsleitungen aufweist, daß die Erdungsleitungen jeweils einen ersten Abschnitt, einen Fächer und einen zweiten Abschnitt aufweisen, wobei die Länge des ersten Abschnitts jeweils einem Viertel der vorbestimmten Wellenlänge der Radar-Signale entspricht, wobei am Ende des ersten Abschnitts jeweils der Fächer vorgesehen ist, wobei sich an das Ende des ersten Abschnitts und den Fächer jeweils der zweite Abschnitt anschließt, wobei die Länge des zweiten Abschnitts jeweils geringer ist als die Hälfte der vorbestimmten Wellenlänge und wobei der zweite Abschnitt jeweils geerdet ist.

Erfindungswesentlich ist also, daß der erste Abschnitt der Erdungsleitung nicht direkt auf Erde geführt ist, sondern an seinem Ende einen Fächer aufweist. Als Fächer, im Englischen "radial stub" genannt, wird eine derartige Planarleitungsstruktur bezeichnet, die im wesentlichen die Form eines Viertelkreises aufweist und Teil einer Mikrostreifenleitung sein kann. Die Wirkungsweise eines solchen Fächers ist praktisch die eines Filters, und zwar quasi in Form einer Abblockkapazität für hohe Frequenzen. Das bedeutet, daß durch das Vorsehen des Fächers am Ende des ersten Abschnitts der Erdungsleitung eine "virtuelle Erdung" für hohe Frequenzen vorliegt, so daß hinter dem Fächer praktisch nur noch DC-Anteile existieren, die dann auf herkömmliche Weise, z. B. durch eine Durchkontaktierung an eine auf der anderen Seite der Platine vorgesehene Erdungsschicht geerdet sind.

Gemäß einer bevorzugten Weiterbildung der Erfindung ist dabei insbesondere vorgesehen, daß der Fächer mit seiner Spitze das Ende des ersten Abschnitts und den Anfang des zweiten Abschnitts berührt. Weiterhin ist gemäß einer bevorzugten Weiterbildung der Erfindung vorgesehen, daß der Radius des Fächers einem Viertel der vorbestimmten Wellenlänge entspricht.

Während die Länge des ersten Abschnitts der Erdungsleitung im wesentlichen einem Viertel der vorbestimmten Wellenlänge der Radar-Signale entsprechen soll, ist die Länge des zweiten Abschnitts der Erdungsleitung weniger kritisch. Gemäß einer bevorzugten Weiterbildung der Erfindung ist jedoch vorgesehen, daß die Länge des zweiten Abschnitts geringer ist als die Hälfte der vorbestimmten Wellenlänge. Weiterhin ist es bevorzugt, daß die Länge des zweiten Abschnitts zwischen einem Achtel und drei Achteln der vorbestimmten Wellenlänge liegt. Ganz besonders bevorzugt ist auch hier, daß die Länge des zweiten Abschnitts einem Viertel der vorbestimmten Wellenlänge entspricht.

Erfindungsgemäß wird eine Mehrzahl von Erdungsleitungen mit dem zuvor beschriebenen Aufbau verwendet, um die Zündschutzart "Eigensicherheit" zu realisieren. Die Erdungsleitungen können dann wesentlich schmaler sein als in dem Fall, in dem eine Erdungsleitung alleine die Eigensicherheit gewährleisten muß, wodurch die erzielbare Frequenzbandbreite deutlich verbessert wird. Dabei muß insgesamt natürlich sichergestellt sein, daß die Erdungsleitungen zusammen derart dimensioniert sind, daß sich ein hinreichender Erdungseffekt für die Zündschutzart "Eigensicherheit" ergibt.

Im einzelnen gibt es eine Vielzahl von Möglichkeiten, das erfindungsgemäße Radar-Füllstandsmeßgerät auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: schematisch ein Radar-Füllstandsmeßgerät gemäß einem bevorzugten Ausführungsbeispiel der Erfindung,
- Fig. 2: schematisch den Aufbau der Mikrostreifenleitung mit einer Erdungsleitung gemäß einem nicht erfindungsgemäßen Ausführungsbeispiel und
- Fig. 3: schematisch den Aufbau einer Mikrostreifenleitung mit drei Erdungsleitungen gemäß einem bevorzugten Ausführungsbeispiel der Erfindung.

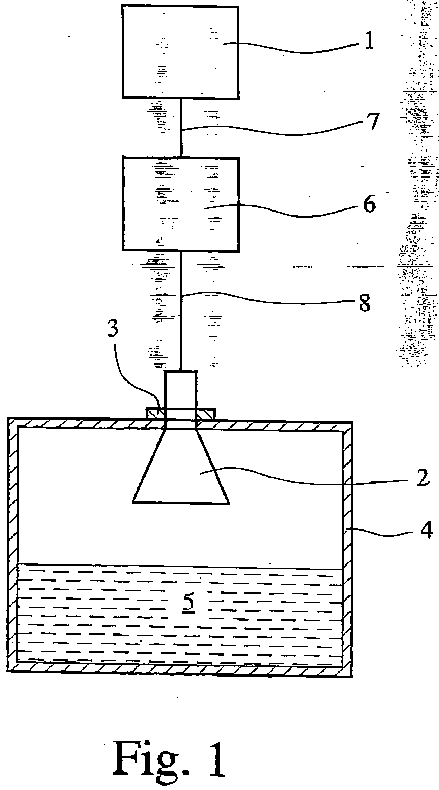

Das aus Fig. 1 ersichtliche Radar-Füllstandsmeßgerät gemäß einem bevorzugten Ausführungsbeispiel der Erfindung weist eine Hochfrequenzeinrichtung 1 zum Erzeugen und Verarbeiten von Radar-Signalen mit einer vorbestimmten Frequenz von typischerweise einigen GHz auf, was Wellenlängen von einigen cm entspricht. Als Antenne 2 zum Abstrahlen und Empfangen von Radar-Signalen ist eine Hornantenne vorgesehen. Grundsätzlich könnte auch eine Stabantenne vorgesehen sein.

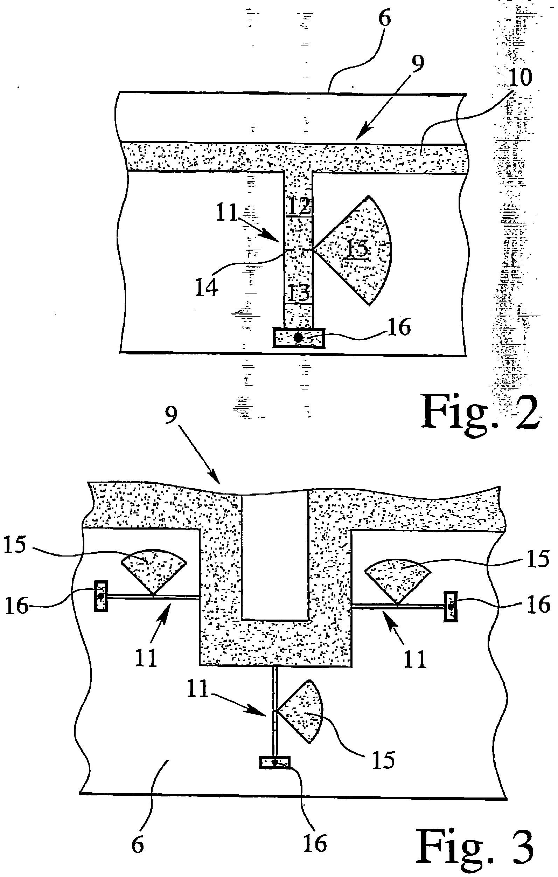

Die Antenne 2 ist über eine Flansch- oder Einschraubverbindung 3 in einem Behälter 4 angeordnet, in dem sich ein Medium 5 befindet, dessen Füllstandshöhe ermittelt werden soll. Zwischen der Hochfrequenzeinrichtung 1 und der Antenne 2 befindet sich eine Platine 6, die mit einer Zuleitung 7 zur Hochfrequenzeinrichtung 1 und mit einer Zuleitung 8 zur Antenne 2 verbunden ist. Details zur möglichen Ausbildung der Platine 6 sind den Fig. 2 und 3 entnehmbar.

Fig. 2 zeigt nun ausschnittsweise die Ausgestaltung der Platine 6 gemäß einem nicht erfindungsgemäßen Ausführungsbeispiel. Wie Fig. 2 entnehmbar, ist die Platine 6 auf einer Seite mit einer Mikrostreifenleitung 9 versehen, die einerseits einen die Zuleitung 7 zur Hochfrequenzeinrichtung 1 mit der Zuleitung 8 zur Antenne 2 verbindenden Leitungsanteil 10 sowie eine Erdungsleitung 11 aufweist. Die Erdungsleitung weist einen ersten Abschnitt 12 und einen zweiten Abschnitt 13 auf. Am gestrichelt dargestellten Übergang 14 zwischen dem ersten Abschnitt 12 und dem zweiten Abschnitt 13 ist ein Fächer 15 vorgesehen, der die Erdungsleitung 11 mit seiner Spitze kontaktiert. Dimensionierung und Funktion der Erdungsleitung 11 ist nun wie folgt:
Der erste Abschnitt 12 weist eine Länge auf, die im wesentlichen genau einem Viertel der vorbestimmten Wellenlänge der Radar-Signale entspricht. Der sich an den ersten Abschnitt 12 direkt anschließende zweite Abschnitt 13 weist gemäß dem vorliegend beschriebenen ersten bevorzugten Ausführungsbeispiel der Erfindung ebenfalls eine Länge auf, die einem Viertel der vorbestimmten Wellenlänge der Radar-Signale entspricht. Die Länge des zweiten Abschnitts 13 ist jedoch weniger kritisch als die Länge des ersten Abschnitts 12, so daß z. B. auch eine Länge des zweiten Abschnitts 13 von einem Achtel oder drei Achteln der vorbestimmten Wellenlänge der Radar-Signale vorgesehen sein könnte. Der zweite Abschnitt 13 ist an seinem vom ersten Abschnitt 12 abgewandten Ende geerdet, nämlich dadurch, daß er mittels einer Durchkontaktierung 16 mit einer auf der anderen Seite der Platine 6 vorgesehenen, nicht weiter dargestellten Erdungsschicht verbunden ist.

Wesentlich ist nun, daß am Ende des ersten Abschnitts 12 der Fächer 15 vorgesehen ist. Der Fächer 15 wirkt dort nämlich quasi als Abblockkapazität für hohe Frequenzen, so daß ein "virtueller Kurzschluß" für hochfrequente Signalanteile erzielt wird. Das bedeutet, daß nach dem Fächer 15 im zweiten Abschnitt 13 der Erdungsleitung 11 praktisch nur noch DC-Signalanteile vorhanden sind, die auf herkömmliche Weise, nämlich mittels der Durchkontaktierung 16 auf Erde geführt werden. Die wesentlichen Vorteile dieser Konstruktion liegen darin, daß sie gut reproduzierbar ist und sich mit numerischen Simulationsverfahren gut berechnen läßt, da nur eine Seite der Platine 6 im Simulationsverfahren berücksichtigt werden muß.

Aus Fig. 3 ist ausschnittsweise eine Platine 6 mit Mikrostreifenleitung 9 gemäß einem bevorzugten Ausführungsbeispiel der Erfindung ersichtlich. Dabei ist vorgesehen, daß eine Mehrzahl von Erdungsleitungen 11, nämlich genau drei Erdungsleitungen 11, bereitgestellt werden, um die Zündschutzart "Eigensicherheit" zu erzielen. Im Gegensatz zu der Erdungsleitung 11 gemäß dem nicht erfindungsgemäßen Ausführungsbeispiel sind die Erdungsleitungen 11 gemäß dem vorliegend beschriebenen bevorzugten Ausführungsbeispiel der Erfindung wesentlich schmaler ausgebildet, haben nämlich jeweils eine deutlich geringere Breite als 2 mm, was vorliegend in etwa die untere Grenze dafür darstellt, mit einer einzigen Erdungsleitung 11 Eigensicherheit zu erzielen. Damit würde eine einzige Erdungsleitung 11 gemäß dem bevorzugten Ausführungsbeispiel der Erfindung nicht genügen, um eine hinreichende Erdung zur Erzielung der Zündschutzart "Eigensicherheit" zu erreichen. Durch die Kombination von drei Erdungsleitungen 11 kann diesem Problem jedoch abgeholfen werden, wobei als Vorteil bei dieser Konstruktion zu erwähnen ist, daß die Frequenzbandbreite aufgrund der schmaleren Erdungsleitungen 11 gegenüber der Konstruktion gemäß dem nicht erfindungsgemäßen Ausführungsbeispiel deutlich erhöht ist.

## Patentansprüche

1. Radar-Füllstandsmeßgerät, mit einer Hochfrequenzeinrichtung (1) zum Erzeugen und Verarbeiten von Radar-Signalen mit vorbestimmter Frequenz und Wellenlänge, einer Antenne (2) zum Abstrahlen oder/und Empfangen der Radar-Signale sowie einer auf einer Platine (6) vorgesehenen und eine Mikrostreifenleitung (9) aufweisenden Schaltung zum Verbinden der Hochfrequenzeinrichtung (1) mit der Antenne (2), **dadurch gekennzeichnet, dass** die Mikrostreifenleitung (9) eine Mehrzahl von Erdungsleitungen (11) aufweist, daß die Erdungsleitungen jeweils (11) einen ersten Abschnitt (12), einen Fächer (15) und einen zweiten Abschnitt (13) aufweisen, wobei die Länge des ersten Abschnitts (11) jeweils einem Viertel der vorbestimmten Wellenlänge entspricht, wobei am Ende des ersten Abschnitts (12) jeweils der Fächer (15) vorgesehen ist, wobei sich an das Ende des ersten Abschnitts (12) und den Fächer (15) jeweils der zweite Abschnitt (13) anschließt, wobei die Länge des zweiten Abschnitts (13) jeweils geringer ist als die Hälfte der vorbestimmten Wellenlänge und wobei der zweite Abschnitt (13) jeweils geerdet ist.

2. Radar-Füllstandsmeßgerät nach Anspruch 1, **dadurch gekennzeichnet, daß** der Fächer (15) mit seiner Spitze das Ende des ersten Abschnitts (12) und den Anfang des zweiten Abschnitts (13) berührt.

3. Radar-Füllstandsmeßgerät nach Anspruch 1 oder 2, **dadurch gekennzeichnet, daß** der Radius des Fächers (15) einem Viertel der vorbestimmten Wellenlänge entspricht.

4. Radar-Füllstandsmeßgerät nach einem der Ansprüche 1 bis 3, **dadurch gekennzeichnet, daß** die Länge des zweiten Abschnitts (13) zwischen einem Achtel und drei Achteln der vorbestimmten Wellenlänge liegt.

5. Radar-Füllstandsmeßgerät nach Anspruch 4, **dadurch gekennzeichnet, daß** die Länge des zweiten Abschnitts (13) einem Viertel der vorbestimmten Wellenlänge entspricht.

6. Radar-Füllstandsmeßgerät nach einem der Ansprüche 1 bis 5, **dadurch gekennzeichnet, daß** der zweite Abschnitt (13) mittels einer Durchkontaktierung (16) an eine auf der der Seite, auf der sich die Mikrostreifenleitung (9) befindet, gegenüberliegenden Seite der Platine (6) vorgesehene Erdungsschicht angeschlossen ist.

7. Radar-Füllstandsmeßgerät nach einem der Ansprüche 1 bis 6, **dadurch gekennzeichnet, daß** drei Erdungsleitungen (11) mit einer Breite kleiner als 2 mm vorgesehen sind.

## Claims

1. Radar fill level measuring device having a high frequency device (1) for generating and processing radar signals with a predetermined frequency and wavelength, an antenna (2) for emitting and/or receiving the radar signals as well as a switch provided on a printed circuit board (6) and having a micro strip line (9) for connecting the high frequency device (1) to the antenna (2), **characterized in that** the micro strip line (9) has a plurality of grounding conductors (11), that the grounding conductors (11) each have a first section (12), a radial stub (15), and a second section (13), wherein the length of the first section (11) corresponds to a quarter of the predetermined wavelength, wherein each of the radial stubs (15) is provided on the end of the first section (12), wherein the second section (13) connects to the end of the first section (12) and the radial stub (15), wherein the length of the second section (13) is less than half of the predetermined wavelength and wherein the second section (13) is grounded.

2. Radar fill level measuring device according to claim 1, **characterized in that** the radial stub (15) comes into contact with the end of the first section (12) and the beginning of the second section (13) with its tip.

3. Radar fill level measuring device according to claim 1 or 2, **characterized in that** the radius of the radial stub (15) corresponds to a quarter of the predetermined wavelength.

4. Radar fill level measuring device according to any one of claims 1 to 3, **characterized in that** the length of the second section (13) lies between one eighth and three eighths of the predetermined wavelength.

5. Radar fill level measuring device according to claim 4, **characterized in that** the length of the second section (13) corresponds to a quarter of the predetermined wavelength.

6. Radar fill level measuring device according to any one of claims 1 to 5, **characterized in that** the second section (13) is connected by means of a via (16) to a grounding layer provided on the side of the printed circuit board (6) opposite the side, on which the micro strip line (9) is located.

7. Radar fill level measuring device according to any one of claims 1 to 6, **characterized in that** three grounding conductors (11) having a width of less than 2 mm are provided.

## Revendications

1. Appareil de mesure de niveau de remplissage par radar, comportant un dispositif à haute fréquence (1) destiné à générer et traiter des signaux radar ayant une fréquence et une longueur d'onde prédéterminée, une antenne (2) destinée à émettre et/ou recevoir des signaux radar et un circuit disposé sur une carte (6) et comportant une ligne à microruban (9) pour connecter le dispositif à haute fréquence (1) à l'antenne (2), **caractérisé en ce que** la ligne à microruban (9) comprend une pluralité de lignes de mise à la masse (11), **en ce que** les lignes de mise à la masse comprennent respectivement (11) une première partie (12), un éventail (15) et une seconde partie (13), dans lequel la longueur de la première partie (11) correspond respectivement à un quart de la longueur d'onde prédéterminée, dans lequel l'éventail (15) est respectivement disposé à l'extrémité de la première partie (12), dans lequel la seconde partie (13) se raccorde respectivement à l'extrémité de la première partie (12) et à l'éventail (15), dans lequel la longueur de la seconde partie (13) est respectivement inférieure à la moitié de la longueur d'onde prédéterminée et dans lequel la seconde partie (13) est respectivement mise à la masse.

2. Appareil de mesure de niveau de remplissage par radar selon la revendication 1, **caractérisé en ce que** l'éventail (15) est en contact par son sommet avec l'extrémité de la première partie (12) et avec le début de la seconde partie (13).

3. Appareil de mesure de niveau de remplissage par radar selon la revendication 1 ou 2, **caractérisé en ce que** le rayon de l'éventail (15) correspond à un quart de la longueur d'onde prédéterminée.

4. Appareil de mesure de niveau de remplissage par radar selon l'une quelconque des revendications 1 à 3, **caractérisé en ce que** la longueur de la seconde partie (13) est comprise entre un huitième et trois huitièmes de la longueur d'onde prédéterminée.

5. Appareil de mesure de niveau de remplissage par radar selon la revendication 4, **caractérisé en ce que** la longueur de la seconde partie (13) correspond à un quart de la longueur d'onde prédéterminée.

6. Appareil de mesure de niveau de remplissage par radar selon l'une quelconque des revendications 1 à 5, **caractérisé en ce que** la seconde partie (13) est raccordée au moyen d'un contact traversant (16) à une couche de mise à la masse prévue sur la face de la carte (6) qui est opposée à la face sur laquelle se trouve la ligne à microruban (9).

7. Appareil de mesure de niveau de remplissage par radar selon l'une quelconque des revendications 1 à 6, **caractérisé en ce qu'**il est prévu trois lignes de mise à la masse (11) dont la largeur est inférieure à 2 mm.
